Europäisches Patentamt

**European Patent Office**

Office européen des brevets

(19)

(11) **EP 0 914 374 B1**

(12) **EUROPÄISCHE PATENTSCHRIFT**

(45) Veröffentlichungstag und Bekanntmachung des Hinweises auf die Patenterteilung:
**18.10.2000   Patentblatt 2000/42**

(21) Anmeldenummer: **97934538.6**

(22) Anmeldetag: **24.07.1997**

(51) Int Cl.$^7$: **C08L 51/00**

(86) Internationale Anmeldenummer:
**PCT/EP97/04031**

(87) Internationale Veröffentlichungsnummer:
**WO 98/04623 (05.02.1998 Gazette 1998/05)**

(54) **VORRICHTUNG ZUR HALTUNG ODER VERSORGUNG VON KLEINTIEREN**

DEVICE FOR RAISING OR ACCOMMODATING SMALL ANIMALS

DISPOSITIF POUR ELEVER ET NOURRIR DE PETITS ANIMAUX

(84) Benannte Vertragsstaaten:
**BE DE ES FR GB IT NL**

(30) Priorität: **25.07.1996   DE 19630097**

(43) Veröffentlichungstag der Anmeldung:
**12.05.1999   Patentblatt 1999/19**

(73) Patentinhaber: **BASF AKTIENGESELLSCHAFT**
**67056 Ludwigshafen (DE)**

(72) Erfinder:
• **NAARMANN, Herbert**
  **D-67227 Frankenthal (DE)**
• **MC KEE, Graham, Edmund**
  **D-67433 Neustadt (DE)**
• **PIRKER, Alfred**
  **D-67346 Speyer (DE)**
• **STERZEL, Hans-Josef**
  **D-67125 Dannstadt-Schauernheim (DE)**
• **BRANDSTETTER, Franz**
  **D-67435 Neustadt (DE)**
• **VON BERNSTORFF, Bernd-Steffen**
  **D-67157 Wachenheim (DE)**
• **ROSENAU, Bernhard**
  **D-67434 Neustadt (DE)**
• **ENDEMANN, Ulrich**
  **D-67227 Frankenthal (DE)**
• **STRAUBE, Burkhard**
  **D-67059 Ludwigshafen (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
| EP-A- 0 270 998 | EP-A- 0 291 208 |
| EP-A- 0 450 485 | EP-A- 0 476 942 |
| EP-A- 0 592 953 | WO-A-91/01350 |
| US-A- 3 700 754 | US-A- 4 175 175 |

**Beschreibung**

Die Erfindung betrifft Vorrichtungen zur Haltung oder Versorgung von Kleintieren. Insbesondere betrifft die Erfindung solche Vorrichtungen, die mechanisch sehr stabil sind, das heißt eine hohe Steifigkeit und Zähigkeit aufweisen. Zudem weisen sie eine gute Alterungs- und Chemikalienbeständigkeit auf, wie auch eine leicht zu reinigende Oberfläche.

Für die Herstellung von Vorrichtungen zur Haltung oder Versorgung von Kleintieren werden eine Vielzahl von Werkstoffen eingesetzt. Beispielsweise werden Metalle eingesetzt, bei denen jedoch die Formgebung eingeschränkt ist. Zudem ist eine Nachbearbeitung erforderlich. Metallboxen weisen ein hohes Gewicht auf und sind korrosionsanfällig, gerade unter Bedingungen der Tierhaltung.

Die Nachteile von Metallboxen werden durch Verwendung von Thermoplasten vermieden. So werden Thermoplaste, wie PVC, ABS, ABS/PC und PP/PE eingesetzt.

Ein Nachteil der Verwendung von PVC (Polyvinylchlorid) ist seine hohe Dichte und somit das damit verbundene hohe Gewicht von Formteilen, sowie die erschwerte Verarbeitung im Spritzgießverfahren.

Vorrichtungen aus ABS (Acrylnitril/Butadien/Styrol-Copolymer) weisen eine teilweise nicht ausreichende Chemikalienbeständigkeit auf und neigen teilweise zur Versprödung, insbesondere bei der Anwendung in der Tieraufzucht.

ABS/PC(Polycarbonat)-Blends weisen ebenfalls eine teilweise nicht ausreichende Chemikalienbeständigkeit auf.

PP/PE (Polypropylen/Polyethylen)-Blends sind nur mäßig kratzfest, zudem weisen sie eine unzureichende Maßhaltigkeit der Teile auf. Sie sind schwierig thermoformbar und haben teilweise ein nicht ausreichendes Zähigkeits/Steifigkeits-Verhältnis.

Aufgabe der vorliegenden Erfindung ist es, neue Vorrichtungen zur Haltung oder Versorgung von Kleintieren bereitzustellen, die eine niedrige Dichte aufweisen, eine hohe Steifigkeit und Zähigkeit besitzen, sowie gute Alterungs- und Chemikalienbeständigkeit. Zudem sollten die Oberflächen leicht zu reinigen sein.

Erfindungsgemäß werden diese Aufgaben gelöst durch Verwendung einer von ABS verschiedenen thermoplastischen Formmasse, enthaltend, bezogen auf die Summe der Mengen der Komponenten A und B, und ggf. C und/oder D, die insgesamt 100 Gew.-% ergibt,

a: 1 - 99 Gew.-% eines teilchenförmigen Emulsionspolymerisats mit einer Glasübergangstemperatur unterhalb von 0 °C und einer mittleren Teilchengröße von 50 - 1000 nm als Komponente A, wobei es sich um ein Pfropfcopolymerisat handelt aus

a1: 1 - 99 Gew.-% einer teilchenförmigen Pfropfgrundlage A1 mit einer Glasübergangstemperatur unterhalb von 0°C,

a2: 1 - 99 Gew.-% einer Pfropfauflage A2 aus den Monomeren, bezogen auf A2,

a21: 40 - 100 Gew.-% Einheiten eines vinylaromatischen Monomeren als Komponente A21 und

a22: bis 60 Gew.-% Einheiten eines ethylenisch ungesättigten Monomeren als Komponente A22,

wobei die Pfropfauflage A2 aus mindestens einer Pfropfhülle besteht,

b: 1 - 99 Gew.-% mindestens eines amorphen oder teilkristallinen Polymerisats als Komponente B,

c: 0 - 50 Gew.-% Polycarbonate als Komponente C, und

d: 0 - 50 Gew.-% faser- oder teilchenförmige Füllstoffe oder deren Gemische als Komponente D

zur Herstellung von Vorrichtungen zur Haltung oder Versorgung von Kleintieren.

Die zur Herstellung der erfindungsgemäßen Vorrichtungen erfindungsgemäß verwendeten thermoplastischen Formmassen sind an sich bekannt. Beispielsweise sind in DE-A-12 60 135, DE-C-19 11 882, DE-A-28 26 925, DE-A-31 49 358, DE-A-32 27 555 und DE-A-40 11 162 erfindungsgemäß verwendbare Formmassen beschrieben.

Die zur Herstellung der erfindungsgemäßen Vorrichtungen erfindungsgemäß verwendeten von ABS verschiedenen Formmassen enthalten gemäß einer Ausführungsform die nachstehend aufgeführten Mengen der Komponenten A und B und ggf. C und/oder D, wie noch nachstehend definiert. Sie enthalten, bezogen auf die Summe der Mengen der Komponenten A und B, und ggf. C und/oder D, die insgesamt 100 Gew.-% ergibt,

a: 1 - 99 Gew.-%, vorzugsweise 15 - 60 Gew.-%, insbesondere 25 - 50 Gew.-%, eines teilchenförmigen Emulsionspolymerisats mit einer Glasübergangstemperatur unterhalb von 0°C und einer mittleren Teilchengröße von 50 - 1000 nm, vorzugsweise 50 - 500 nm, als Komponente A,

b: 1 - 99 Gew.-%, vorzugsweise 40 - 85 Gew.-%, insbesondere 50 - 75 Gew.-%,mindestens eines amorphen oder teilkristallinen Polymerisats als Komponente B,

c: 0 - 50 Gew.-% Polycarbonate als Komponente C, und

d: 0 - 50 Gew.-% faser- oder teilchenförmige Füllstoffe oder deren Gemische als Komponente D.

Im folgenden wird die Erfindung näher erläutert.

Zunächst werden die zur Herstellung der erfindungsgemäßen Vorrichtungen verwendeten Formmassen beschrieben und die Komponenten, aus denen diese aufgebaut sind.

**KOMPONENTE A**

Komponente A ist ein teilchenförmiges Emulsionspolymerisat mit einer Glasübergangstemperatur unterhalb von 0°C und einer mittleren Teilchengröße von 50 - 1000 nm.

Bei Komponente A handelt es sich um ein Pfropfcopolymerisat aus

a1: 1 - 99 Gew.-%, vorzugsweise 55 - 80 Gew.-%, insbesondere 55 - 65 Gew.-%, einer teilchenförmigen Pfropfgrundlage A1 mit einer Glasübergangstemperatur unterhalb von 0°C,

a2: 1 - 99 Gew.-%, vorzugsweise 20 - 45 Gew.-%, insbesondere 35 - 45 Gew.-%, einer Pfropfauflage A2 aus den Monomeren, bezogen auf A2,

a21: 40 - 100 Gew.-%, vorzugsweise 65 - 85 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente A21 und

a22: bis 60 Gew.-%, vorzugsweise 15 - 35 Gew.-%, Einheiten eines ethylenisch ungesättigten Monomeren, vorzugsweise des Acrylnitrils oder Methacrylnitrils, insbesondere des Acrylnitrils als Komponente A22.

Die Pfropfauflage A2 besteht dabei aus mindestens einer Pfropfhülle, wobei das Pfropfcopolymerisat A insgesamt eine mittlere Teilchengröße von 50 - 1000 nm aufweist.

Gemäß einer Ausführungsform der Erfindung besteht Komponente A1 aus den Monomeren

a11: 80 - 99,99 Gew.-%, vorzugsweise 95 - 99,9 Gew.-%, eines $C_{1-8}$-Alkylesters der Acrylsäure, vorzugsweise n-Butylacrylat und/oder Ethylhexylacrylat als Komponente A11,

a12: 0,01 - 20 Gew.-%, vorzugsweise 0,1 - 5,0 Gew.-%, mindestens eines polyfunktionellen vernetzenden Monomeren, vorzugsweise Diallylphthalat und/oder DCPA als Komponente A12.

Gemäß einer Ausführungsform der Erfindung beträgt die mittlere Teilchengröße der Komponente A 50 - 800 nm, vorzugsweise 50 - 600 nm.

Gemäß einer weiteren erfindungsgemäßen Ausführungsform ist die Teilchengrößenverteilung der Komponente A bimodal, wobei 60 - 90 Gew.-% eine mittlere Teilchengröße von 50 - 200 nm und 10 - 40 Gew.-% eine mittlere Teilchengröße von 50 - 400 nm aufweisen, bezogen auf das Gesamtgewicht der Komponente A.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durch-

messer als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Die Glasübergangstemperatur des Emulsionspolymerisats A wie auch der anderen erfindungsgemäß verwendeten Komponenten wird mittels DSC (Differential Scanning Calorimetry) nach ASTM 3418 (mid point temperature) bestimmt.

Als Emulsionspolymerisat A können einschlägig übliche Kautschuke Verwendung finden, wie gemäß einer Ausführungsform der Erfindung, Epichlorhydrin-Kautschuke, Ethylen-Vinylacetat-Kautschuke, Polyethylenchlorsulfonkautschuke, Siliconkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke, Butylkautschuke und Fluorkautschuke. Bevorzugt werden Acrylatkautschuk, Ethylen-Propylen(EP)-Kautschuk, Ethylen-Propylen-Dien(EPDM)-Kautschuk, insbesondere Acrylatkautschuk, eingesetzt.

Reine Butadienkautschuke, wie sie in ABS Verwendung finden, können nicht als ausschließliche Komponente A verwendet werden.

Gemäß einer Ausführungsform wird der Dien-Grundbaustein-Anteil im Emulsionspolymerisat A so gering gehalten, daß möglichst wenig nicht umgesetzte Doppelbindungen im Polymerisat verbleiben. Gemäß einer Ausführungsform liegen keine Dien-Grundbausteine im Emulsionspolymerisat A vor.

Bei den Acrylatkautschuken handelt es sich vorzugsweise um Alkylacrylat-Kautschuke aus einem oder mehreren $C_{1-8}$-Alkylacrylaten, vorzugsweise $C_{4-8}$-Alkylacrylaten, wobei bevorzugt mindestens teilweise Butyl-, Hexyl-, Octyl- oder 2-Ethylhexylacrylat, insbesondere n-Butyl- und 2-Ethylhexylacrylat, verwendet wird. Diese Alkylacrylat-Kautschuke können bis zu 30 Gew.-% harte Polymere bildende Monomere, wie Vinylacetat, (Meth)acrylnitril, Styrol, substituiertes Styrol, Methylmethacrylat oder Vinylether einpolymerisiert enthalten.

Die Acrylatkautschuke enthalten gemäß einer Ausführungsform der Erfindung weiterhin 0,01 - 20 Gew.-%, vorzugsweise 0,1 - 5 Gew.-%, an vernetzend wirkenden, polyfunktionellen Monomeren (Vernetzungsmonomere). Beispiele hierfür sind Monomere, die 2 oder mehr zur Copolymerisation befähigte Doppelbindungen enthalten, die vorzugsweise nicht in den 1,3-Stellungen konjugiert sind.

Geeignete Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylat, Allylmethacrylat. Als besonders günstiges Vernetzungsmonomer hat sich Dicyclopentadienylacrylat (DCPA) erwiesen (vgl. DE-C-12 60 135).

Geeignete Siliconkautschuke können z.B. vernetzte Siliconkautschuke aus Einheiten der allgemeinen Formeln $R_2SiO$, $RSiO_{3/2}$, $R_3SiO_{1/2}$ und $SiO_{2/4}$ sein, wobei der Rest R einen einwertigen Rest darstellt. Die Menge der einzelnen Siloxaneinheiten sind dabei so bemessen, daß auf 100 Einheiten der Formel $R_2SiO$ 0 bis 10 Mol-Einheiten der Formel $RSiO_{3/2}$, 0 bis 1,5 Mol-Einheiten $R_3SiO_{1/2}$ und 0 bis 3 Mol-Einheiten $SiO_{2/4}$ vorhanden sind. R kann dabei entweder ein einwertiger gesättigte Kohlenwasserstoffrest mit 1 bis 18 C-Atomen, der Phenylrest oder der Alkoxyrest oder eine radikalisch leicht angreifbare Gruppe wie der Vinyl- oder der Mercaptopropylrest sein. Bevorzugt ist, daß mindestens 80% aller Reste R Methylreste sind; insbesondere bevorzugt sind Kombinationen aus Methyl- und Ethyl- oder Phenylresten.

Bevorzugte Siliconkautschuke enthalten eingebaute Einheiten radikalisch angreifbarer Gruppen, insbesondere Vinyl-, Allyl-, Halogen-, Mercaptogruppen, vorzugsweise in Mengen von 2 - 10 mol-%, bezogen auf alle Reste R. Sie können beispielsweise hergestellt werden wie in EP-A-0 260 558 beschrieben.

In manchen Fällen kann es zweckmäßig sein, ein Emulsionspolymerisat A aus unvernetztem Polymer zu verwenden. Als Monomere zur Herstellung dieser Polymere können alle voranstehend genannten Monomere dienen. Bevorzugte unvernetzte Emulsionspolymerisate A sind z.B. Homo- und Copolymere von Acrylsäureestern, inbesondere des n-Butyl- und des Ethylhexylacrylats, sowie Homo- und Copolymere des Ethylens, Propylens, Butylens, Isobutylens, als auch Poly(organosiloxane), alle mit der Maßgabe, daß sie linear oder auch verzweigt sein dürfen.

**Kern/Schale - Emulsionspolymerisat A**

Bei dem Emulsionspolymerisat A kann es sich auch um ein mehrstufig aufgebautes Polymerisat handeln (sog. "Kern/Schale-Aufbau", "core-shell morphology"). Beispielsweise kann ein kautschukelastischer Kern ($T_g < 0°C$) von einer "harten" Schale (Polymere mit $T_g > 0°C$) oder umgekehrt umhüllt sein.

In einer besonders bevorzugten Ausgestaltung der Erfindung handelt es sich bei der Komponente A um ein Pfropfcopolymerisat. Die Pfropfcopolymerisate A der erfindungsgemäßen Formmassen haben dabei eine mittlere Teilchengröße $d_{50}$ von 50 - 1000 nm, bevorzugt von 50 - 600 nm und besonders bevorzugt von 50 - 400 nm. Diese Teilchengrößen können erzielt werden, wenn man als Pfropfgrundlage A1 dieser Komponente A Teilchengrößen von 50 - 350 nm, bevorzugt von 50 - 300 nm und besonders bevorzugt von 50 - 250 nm verwendet.

Das Pfropfcopolymerisat A ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A-0 230 282, DE-A-36 01 419, EP-A-0 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C, vorzugsweise oberhalb von 50°C haben. Der mehrstufige Aufbau dient u.a. dazu, eine (Teil-)Verträglichkeit der Kautschukteilchen A mit dem Thermoplasten B zu erzielen.

Pfropfcopolymerisate A werden beispielsweise hergestellt durch Pfropfung von mindestens einem der im folgenden aufgeführten Monomeren A2 auf mindestens eine der vorstehend aufgeführten Pfropfgrundlagen bzw. Pfropfkernmaterialien A1. Als Pfropfgrundlagen A1 der erfindungsgemäßen Formmassen sind alle Polymerisate geeignet, die oben unter den Emulsionspolymerisaten A beschrieben sind.

Gemäß einer Ausführungsform der Erfindung ist die Pfropfgrundlage A1 aus 15 - 99 Gew.-% Acrylatkautschuk, 0,1 - 5 Gew.-% Vernetzer und 0 - 49,9 Gew.-% eines der angegebenen weiteren Monomere oder Kautschuke zusammengesetzt.

Geeignete Monomere zur Bildung der Pfropfauflage A2 können beispielsweise aus den im folgenden aufgeführten Monomeren und deren Gemischen ausgewählt sein:

Vinylaromatische Monomeren, wie Styrol und seine substituierten Derivate, wie $\alpha$-Methylstyrol, p-Methylstyrol, 3,4-Dimethylstyrol, p-tert.-Butylstyrol, o-und p-Divinylbenzol und p-Methyl-$\alpha$-methylstyrol oder $C_1$-$C_8$-Alkyl(meth) acrylate wie Methylmethacrylat, Ethylmethacrylat, Methylacrylat, Ethylacrylat, n-Butylacrylat, s-Butylacrylat; bevorzugt sind Styrol, $\alpha$-Methylstyrol, Methylmethacrylat, insbesondere Styrol- und/oder $\alpha$-Methylstyrol, und ethylenisch ungesättigte Monomeren, wie Acryl- und Methacrylverbindungen, wie Acrylnitril, Methacrylnitril, Acryl- und Methacrylsäure, Methylacrylat, Ethylacrylat, n- und Isopropylacrylat, n- und Isobutylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimide, z.B. Alkyl- und Arylmaleinimide, wie beispielsweise Methyl- oder Phenylmaleinimid. Bevorzugt sind Acrylnitril und Methacrylnitril, insbesondere Acrylnitril.

Weiterhin können als (Co-) Monomeren Styrol-, Vinyl-, Acryl- oder Methacrylverbindungen (z.B. Styrol, wahlweise substituiert mit $C_{1-12}$-Alkylresten, Halogenatomen, Halogenmethylenresten; Vinylnaphthalin, Vinylcarbazol; Vinylether mit $C_{1-12}$-Etherresten; Vinylimidazol, 3-(4-)Vinylpyridin, Dimethylaminoethyl(meth)acrylat, p-Dimethylaminostyrol, Acrylnitril, Methacrylnitril, Acrylsäure, Methacrylsäure, Acrylsäurebutylester, Acrylsäureethylhexylester und Methylmethacrylat sowie Fumarsäure, Maleinsäure, Itaconsäure oder deren Anhydride, Amide, Nitrile oder Ester mit 1 bis 22 C-Atome, vorzugsweise 1 bis 10 C-Atome enthaltenden Alkoholen) verwendet werden.

Gemäß einer Ausführungsform der Erfindung umfaßt Komponente A 50 - 90 Gew.-% der vorstehend beschriebenen Pfropfgrundlage A1 und 10 - 50 Gew.-% der vorstehend beschriebenen Pfropfauflage A2, bezogen auf das Gesamtgewicht der Komponente A.

Gemäß einer Ausführungsform der Erfindung dienen als Pfropfgrundlage A1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

In einer bevorzugten Ausführungsform besteht die Pfropfauflage A2 aus mindestens einer Pfropfhülle und die äußerste Pfropfhülle davon hat eine Glasübergangstemperatur von mehr als 30°C, wobei ein aus den Monomeren der Pfropfauflage A2 gebildetes Polymer eine Glasübergangstemperatur von mehr als 80°C aufweisen würde.

Bezüglich der Messung der Glasübergangstemperatur und der mittleren Teilchengröße sowie der Q-Werte gilt für die Pfropfcopolymerisate A das für die Emulsionspolymerisate A Gesagte.

Die Pfropfcopolymerisate A können auch durch Pfropfung von vorgebildeten Polymeren auf geeignete Pfropfhomopolymerisate hergestellt werden. Beispiele dafür sind die Umsetzungsprodukte von Maleinsäureanhydrid- oder Säuregruppen enthaltenden Copolymeren mit basenhaltigen Kautschuken.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt, insbesondere in Gegenwart von Latices der Komponente A1 bei Temperaturen von 20°C - 90°C unter Verwendung wasserlöslicher oder öllöslicher Initiatoren wie Peroxodisulfat oder Benzoylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A-28 26 925, 31 49 358 und in der DE-C-12 60 135.

Der Aufbau der Pfropfhüllen erfolgt vorzugsweise im Emulsionspolymerisationsverfahren, wie es beschrieben ist in DE-A-32 27 555, 31 49 357, 31 49 358, 34 14 118. Das definierte Einstellen der erfindungsgemäßen Teilchengrößen von 50 - 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US-C-5,196,480.

Gemäß dem in der DE-C-12 60 135 beschriebenen Verfahren wird zunächst die Pfropfgrundlage A1 hergestellt, indem der oder die gemäß einer Ausführungsform der Erfindung verwendeten Acrylsäureester und das mehrfunktionelle, die Vernetzung bewirkende Monomere, ggf. zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 - 5 Gew.-%, insbesondere von 1 - 2 Gew.-%, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, wie Kaliumpersulfat. Es können jedoch auch Redoxsysteme zum Einsatz gelangen. Die Initiatoren werden im allgemeinen in Mengen von 0,1 - 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 - 9 eingestellt werden, wie Natriumbicarbonat und Natriumpyrophosphat, sowie 0 - 3 Gew.-% eines Molekulargewichtsreglers, wie Mercaptane, Terpinole oder dimeres $\alpha$-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureesterpolymerisats einen $d_{50}$-Wert im Bereich von etwa 50 - 1000 nm, vorzugsweise 50 - 150 nm, besonders bevorzugt im Bereich von 80 - 100 nm, besitzt. Die Teilchengrößenverteilung des Latex soll dabei vorzugsweise eng sein. Der Quotient

$$\frac{d_{90} - d_{10}}{d_{50}} = Q$$

soll < 0,5, vorzugsweise < 0,35 sein.

Zur Herstellung des Pfropfpolymerisats A wird sodann in einem nächsten Schritt in Gegenwart des so erhaltenen Latex des vernetzten AcrylsäureesterPolymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polyacrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart des vernetzenden Acrylsäureesterpolymerisats wird so geführt, daß ein Pfropfgrad von 1 - 99 Gew.-%, vorzugsweise 20 - 45 Gew.-%, insbesondere 35 - 45 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen etwa 5 - 15 Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten im allgemeinen 1 - 99 Gew.-%, bevorzugt 55 - 80 und besonders bevorzugt 55 - 65 Gew.-% Pfropfgrundlage A1 und 1 - 99 Gew.-%, bevorzugt 20 - 45, besonders bevorzugt 35 - 45 Gew.-% der Pfropfauflage A2, jeweils bezogen auf das gesamte Pfropfcopolymerisat.

## KOMPONENTE B

Komponente B ist ein amorphes oder teilkristallines Polymerisat.

Vorzugsweise handelt es sich bei Komponente B um ein Copolymerisat aus

b1: 40 - 100 Gew.-%, vorzugsweise 60 - 70 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente B1,

b2: bis 60 Gew.-%, vorzugsweise 30 - 40 Gew.-%, Einheiten eines ethylenisch ungesättigten Monomers, vorzugsweise des Acrylnitrils oder Methacrylnitrils, insbesondere des Acrylnitrils als Komponente B2.

Gemäß einer bevorzugten Ausführungsform der Erfindung beträgt die Viskositätszahl der Komponente B 50 - 90, vorzugsweise 60 - 80.

Die amorphen oder teilkristallinen Polymerisate der Komponente B der zur Herstellung der erfindungsgemäßen Vorrichtungen erfindungsgemäß verwendeten Formmasse, sind vorzugsweise aus mindestens einem Polymeren aus teilkristallinen Polyamiden, teilaromatischen Copolyamiden, Polyolefinen, Ionomeren, Polyestern, Polyetherketonen, Polyoxyalkylenen, Polyarylensulfiden und Polymeren aus vinylaromatischen Monomeren und/oder ethylenisch ungesättigten Monomeren ausgewählt. Es können auch Polymerisatgemische verwendet werden.

Als Komponente B der zur Herstellung der erfindungsgemäßen Vorrichtungen erfindungsgemäß verwendeten Formmasse sind teilkristalline, bevorzugt lineare Polyamide wie Polyamid-6, Polyamid-6,6, Polyamid-4,6, Polyamid-6,12 und teilkristalline Copolyamide auf Basis dieser Komponenten geeignet. Des weiteren können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip aus dem Stand der Technik bekannt sind (vgl. Encyclopedia of Polymers, Vol. 11, S. 315 ff.).

Beispiele für als Komponente B der zur Herstellung der erfindungsgemäßen Vorrichtungen erfindungsgemäß verwendeten Formmassen weiterhin geeignete Polymerisate sind teilkristalline Polyolefine, vorzugsweise Homo- und Copolymerisate von Olefinen wie Ethylen, Propylen, Buten-1, Penten-1, Hexen-1, Hepten-1, 3-Methylbuten-1, 4-Methylbuten-1, 4-Methylpenten-1 und Octen-1. Geeignete Polyolefine sind Polyethylen, Polypropylen, Polybuten-1 oder Poly-4-methylpenten-1. Allgemein unterscheidet man bei Polyethylen (PE) High-Density-PE (HDPE), Low-Density-PE (LDPE) und linear-low-density-PE (LLDPE).

Bei einer anderen Ausführungsform der Erfindung handelt es sich bei der Komponente B um Ionomere. Diese sind im allgemeinen Polyolefine, wie sie oben beschrieben wurden, insbesondere Polyethylen, die Monomere mit Säuregruppen cokondensiert enthalten, z.B. Acrylsäure, Methacrylsäure und ggf. weitere copolymerisierbare Monomere. Die Säuregruppen werden im allgemeinen mit Hilfe von Metallionen wie $Na^+$, $Ca^{2+}$, $Mg^{2+}$ und $Al^{3+}$ in ionische, ggf. ionisch vernetzte Polyolefine umgewandelt, die sich jedoch noch thermoplastisch verarbeiten lassen (siehe z.B. US 3,264,272; 3,404,134; 3,355,319; 4,321,337). Es ist jedoch nicht unbedingt erforderlich, die Säuregruppen enthaltenden Polyolefine mittels Metallionen umzuwandeln. Auch freie Säuregruppen enthaltende Polyolefine, die dann im allgemeinen einen kautschukartigen Charakter besitzen und teilweise noch weitere copolymerisierbare Monomere enthalten, z.B. (Meth)acrylate, sind als erfindungsgemäße Komponente B geeignet.

Daneben können als Komponente B auch Polyester, vorzugsweise aromatischaliphatische Polyester eingesetzt werden. Beispiele sind Polyalkylenterephthalate, z.B. auf Basis von Ethylenglykol, Propandiol-1,3, Butandiol-1,4, Hexandiol-1,6 und 1,4-Bis-hydroxymethyl-cyclohexan, sowie Polyalkylennaphthalate.

Als Komponente B können weiterhin aromatische Polyetherketone eingesetzt werden, wie sie z.B. beschrieben sind in den Druckschriften GB 1 078 234, US 4,010,147, EP-A-0 135 938, EP-A-0 292 211, EP-0 275 035, EP-A-0 270 998, EP-A-0 165 406, und in der Publikation von C. K. Sham et. al., Polymer 29/6, 1016-1020 (1988).

Weiterhin können als Komponente B der zur Herstellung der erfindungsgemäßen Vorrichtungen erfindungsgemäß verwendeten Formmassen Polyoxyalkylene, z.B. Polyoxymethylen, und Oxymethylenpolymerisate eingesetzt werden.

Weiterhin geeignete Komponenten B sind die Polyarylensulfide, insbesondere das Polyphenylensulfid.

Gemäß einer Ausführungsform der Erfindung ist sie dabei aus 50 - 99 Gew.-% vinylaromatischen Monomeren und 1 - 50 Gew.-% mindestens eines der anderen angegebenen Monomeren aufgebaut.

Vorzugsweise ist Komponente B ein amorphes Polymerisat, wie es vorstehend als Pfropfauflage A2 beschrieben ist. Gemäß einer Ausführungsform der Erfindung wird als Komponente B ein Copolymerisat von Styrol und/oder α-Methylstyrol mit Acrylnitril verwendet. Der Acrylnitrilgehalt in diesen Copolymerisaten der Komponente B beträgt dabei 0 - 60 Gew.-%, vorzugsweise 30 - 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich vorzugsweise um ein Styrol/Acrylnitril-Copolymerisat, ein α-Methylstyrol/ Acrylnitril-Copolymerisat oder ein a-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B der erfindungsgemäß verwendeten Formmassen beispielsweise um ein Gemisch aus einem Styrol/Acrylnitril-Copolymerisat und einem a-Methylstyrol/Acrylnitril-Copolymerisat handeln kann. In dem Fall, in dem die Komponente B der erfindungsgemäß verwendeten Formmassen aus einem Gemisch aus einem Styrol/Acrylnitril-Copolymerisat und einem a-Methylstyrol/Acrylnitril-Copolymerisat besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen. Die Komponente B der erfindungsgemäß verwendeten Formmassen kann jedoch auch nur aus einem einzigen Styrol/ Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder α-Methylstyrols mit dem Acrylnitril in Masse, Lösung, Suspension oder wäßriger Emulsion durchgeführt werden. Die Komponente B hat vorzugsweise eine Viskositätszahl von 40 bis 100, bevorzugt 50 bis 90, insbesondere 60 bis 80. Die Bestimmung des Viskositätszahl erfolgt dabei nach DIN 53 726, dabei werden 0,5 g Material in 100 ml Dimethylformamid gelöst.

Das Mischen der Komponenten A und B und gegebenenfalls C, D, kann nach jeder beliebigen Weise nach allen bekannten Methoden erfolgen. Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten A und B durch gemeinsames Extrudieren, Kneten oder Verwalzen der Komponenten, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

In einer bevorzugten Ausführungsform enthalten die zur Herstellung der erfindungsgemäßen Vorrichtungen erfindungsgemäß verwendeten Formmassen neben den Komponenten A und B zusätzliche Komponenten C und/oder D, sowie ggf. weitere Zusatzstoffe, wie im folgenden beschrieben.

## KOMPONENTE C

Geeignete Polycarbonate C sind an sich bekannt. Sie haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger Lösung in Dichlormethan bei 25°C, bevorzugt von 1,15 bis 1,3, haben. Vorzugsweise unterscheiden sich die relativen Lösungsviskositäten der eingesetzten Polycarbonate um nicht mehr als 0,05, insbesondere nicht mehr als 0,04.

Die Polycarbonate C können sowohl als Mahlgut als auch in granulierter Form eingesetzt werden. Sie liegen als Komponente C in Mengen von 0 - 50 Gew.-%, bevorzugt von 10 - 40 Gew.-%, jeweils bezogen auf die gesamte Formmasse, vor.

Der Zusatz von Polycarbonaten führt gemäß einer Ausführungsform der Erfindung unter anderem zu höherer Thermostabilität und verbesserter Rißbeständigkeit der zur Herstellung der erfindungsgemäßen Vorrichtungen erfindungsgemäß verwendeten Formmassen.

## KOMPONENTE D

Als Komponente D enthalten die zur Herstellung der erfindungsgemäßen Vorrichtungen erfindungsgemäß verwendeten bevorzugten thermoplastischen Formmassen 0 - 50 Gew.-%, vorzugsweise 0 - 40 Gew.-%, insbesondere 0 - 30 Gew.-% faser- oder teilchenförmige Füllstoffe oder deren Mischungen, jeweils bezogen auf die gesamte Formmasse. Dabei handelt es sich vorzugsweise um kommerziell erhältliche Produkte.

Verstärkungsmittel wie Kohlenstoffasern und Glasfasern werden üblicherweise in Mengen von 5 - 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern (staple) mit einer Länge von 1 - 10 µm, vorzugsweise 3 - 6 µm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken der Fa. Transmet Corp.), Metallpulver, Metallfasern, metallbeschichtete Füllstoffe, z.B. nickel-beschichtete Glasfasern sowie andere Zuschlagstoffe, die elektromagnetische Wellen abschirmen, den zur Herstellung der erfindungsgemäßen Vorrichtungen erfindungsgemäß verwendeten Formmassen beigemischt werden. Insbesondere kommen Aluminiumflocken (K 102 der Fa. Transmet) für EMI-Zwecke (electro-magnetic interference) in Betracht. Ferner können die Massen mit zusätzlichen Kohlenstoffasern, Ruß, insbesondere Leitfähigkeitsruß, oder nickelbeschichteten C-Fasern vermischt werden.

Die zur Herstellung der erfindungsgemäßen Vorrichtungen erfindungsgemäß verwendeten Formmassen können ferner weitere Zusatzstoffe enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebazat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 - 1 Gew.-%.

Auch Siliconöle, oligomeres Isobutylen oder ähnliche Stoffe kommen als Zusatzstoffe in Frage, die üblichen Mengen betragen 0,05 - 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren wie UV-Stabilisatoren, Schmiermittel und Antistatika werden üblicherweise in Mengen von 0,01 - 5 Gew.-% verwendet, bezogen auf die gesamte Formmasse.

Die Herstellung der zur Herstellung der erfindungsgemäßen Vorrichtungen erfindungsgemäß verwendeten thermoplastischen Formmassen kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten kann nach allen bekannten Methoden erfolgen. Vorzugsweise geschieht jedoch das Mischen durch gemeinsames Extrudieren, Kneten oder Verwalzen der Komponenten, bevorzugt bei Temperaturen von 180 - 400°C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

Die erfindungsgemäßen Vorrichtungen und Befestigungsteile dafür können gemäß einer Ausführungsform der Erfindung nach den bekannten Verfahren der Thermoplastverarbeitung aus den erfindungsgemäß verwendeten thermoplastischen Formmassen hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen.

Die aus den beschriebenen thermoplastischen Formmassen herstellbaren erfindungsgemäßen Vorrichtungen sind kratzfest, stabil und chemikalienbeständig und weisen eine sehr gute Maßhaltigkeit auf. Zudem haben sie eine geringe Dichte und damit ein geringes Gewicht.

Die erfindungsgemäßen Vorrichtungen dienen zur Haltung oder Versorgung von Kleintieren.

Unter "Kleintiere" werden dabei sowohl Geflügel verstanden, wie Hühner oder Hähne, Wachteln, Truthähne usw., wie auch Vierbeiner, wie Ferkel, Kaninchen, Hasen usw.. Die erfindungsgemäßen Vorrichtungen sind jedoch auch zur Haltung und Versorgung von Heimtieren verwendbar, sofern es sich um Kleintiere handelt. Beispiele sind Vögel, Meerschweinchen, Hamster usw..

Gemäß einer Ausführungsform der Erfindung sind die Vorrichtungen Tränken und Tröge. Sie dienen zur Versorgung der Tiere mit Wasser und Futtermitteln. Ebenfalls eingeschlossen sind hierbei die entsprechenden Versorgungsleitungen für Wasser bzw. Futtermittel. Auch Versorgungsleitungen für Futterzusatzmittel sind eingeschlossen. Ebenfalls eingeschlossen sind Entsorgungsleitungen, etwa für Exkremente.

Gemäß einer Ausführungsform der Erfindung sind die Vorrichtungen zur Haltung von Kleintieren Behältnisse für die Tierhaltung, die Tieraufzucht und den Tiertransport. Es kann sich dabei um Geflügelkisten für die Hähnchenaufzucht und den Hähnchentransport zum Schlachten handeln, wobei ein Versandfertigmachen der Hähnchen in einem gesonderten Schritt entfällt. Entsprechende Kisten und Käfige, wie auch Boxen sind dem Fachmann bekannt.

Weiterhin sind die erfindungsgemäßen Vorrichtungen Gitterroste für Böden und/oder Wände von Tierboxen. Hierbei kann es sich erfindungsgemäß um Spaltböden für Jungtiere, wie Ferkel handeln bzw. für andere Kleintiere. Eine weitere Anwendung sind Gitterroste für die Haltung von Hühnern, beispielsweise in Legebatterien.

Insbesondere Vorrichtungen aus Formmassen, die als Komponente C Polycarbonate enthalten, sind sehr wärmeformbeständig und widerstandsfähig gegen anhaltende Wärme. Durch Zusatz des Polycarbonats als Komponente C wird dabei die Wärmeformbeständigkeit und Schlagzähigkeit der flächigen Wandelemente weiter verbessert. Diese Vorrichtungen weisen zudem ein ausgewogenes Verhältnis von Zähigkeit und Steifigkeit und eine gute Dimensionsstabilität auf sowie eine hervorragende Widerstandsfähigkeit gegen Wärmealterung und eine hohe Vergilbungsbeständigkeit bei thermischer Belastung und Einwirkung von UV-Strahlung.

Vorrichtungen aus Formmassen, die Komponenten A und B enthalten, weisen hervorragende Oberflächenbeschaffenheiten auf, die auch ohne weitere Oberflächenbehandlung erhalten werden. Durch geeignete Modifizierung der Kautschukmorphologie kann das Erscheinungsbild der fertigen Oberfläche der Vorrichtungen modifiziert werden, beispielsweise um glänzende oder matte Oberflächengestaltungen zu erreichen. Die Vorrichtungen zeigen bei Einwirkung von Witterung und UV-Bestrahlung einen sehr geringen Vergrauungs- bzw. Vergilbungseffekt, so daß die Oberflächeneigenschaften erhalten bleiben. Weitere vorteilhafte Eigenschaften der Vorrichtungen sind die hohe Witterungsstabilität, gute thermische Beständigkeit, hohe Vergilbungsbeständigkeit bei UV-Bestrahlung und thermischer Belastung, gute Spannungsrißbeständigkeit, insbesondere bei Einwirkung von Chemikalien, und ein gutes antielektrostatisches Verhalten. Zudem weisen sie eine hohe Farbstabilität auf, beispielsweise auch infolge der hervorragenden Beständigkeit gegen Vergilben und Verspröden. Die erfindungsgemäßen Vorrichtungen aus den erfindungsgemäß verwendeten thermoplastischen Formmassen zeigen sowohl bei tiefen Temperaturen wie auch nach längerer Wärmeeinwirkung keinen signifikanten Verlust an Zähigkeit bzw. Schlagzähigkeit, die auch bei der Belastung durch UV-Strahlen erhalten bleibt. Auch die Zugfestigkeit bleibt erhalten. Zudem zeigen sie ein ausgewogenes Verhältnis zwischen Steifigkeit und Zähigkeit.

Es ist möglich, zur Herstellung der erfindungsgemäßen Vorrichtungen gemäß der vorliegenden Erfindung bereits verwendete thermoplastischen Formmassen wiederzuverwerten. Aufgrund der hohen Farbstabilität, Witterungsbeständigkeit und Alterungsbeständigkeit sind die crfindungsgemäß verwendeten Formmassen sehr gut geeignet für die Wiederverwendung. Dabei kann der Anteil an wiederverwendeter (recyclierter) Formmasse hoch sein. Bei Verwendung von beispielsweise 30 Gew.-% bereits verwendeter Formmasse, die in gemahlener Form den erfindungsgemäß verwendeten Formmassen beigemischt wurde, änderten sich die relevanten Materialeigeschaften wie Fließfähigkeit, Vicat-Erweichungstemperatur und Schlagzähigkeit der Formmassen und der daraus hergestellten erfindungsgemäßen Vorrichtungen nicht signifikant. Ähnliche Ergebnisse wurden bei der Untersuchung der Witterungsbeständigkeit erhalten. Die Schlagzähigkeit war auch bei Verwendung von wiederverwerteten thermoplastischen Formmassen über lange Zeit konstant, siehe Lindenschmidt, Ruppmich, Hoven-Nievelstein, International Body Engineering Conference, 21. - 23. September 1993, Detroit, Michigan, USA, Interior and Exterior Systems, Seiten 61 bis 64. Auch die Vergilbungsbeständigkeit blieb erhalten. Die Erfindung wird anhand der nachfolgenden Beispiele näher erläutert.

BEISPIELE

Beispiel 1

*Herstellung von kleinteiligem Pfropfcopolymerisat (A)*

(a1) 16 Teile Butylacrylat und 0,4 Teile Tricyclodecenylacrylat wurden in 150 Teilen Wasser unter Zusatz von einem Teil des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurde innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 76 nm ermittelt. Die Teilchengrößenverteilung war eng (Quotient Q = 0,29).

(a2) 150 Teile des nach (al) erhaltenen Polybutylacrylat-Latex wurden mit 40 Teilen einer Mischung aus Styrol und Acrylnitril (Gewichtsverhältnis 75 : 25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%.

Beispiel 2

*Herstellung von großteiligem Pfropfcopolymerisat (A)*

(a1) Zu einer Vorlage aus 2,5 Teilen des in der Stufe (al) aus Beispiel 1 hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengröße (Gewichtsmittel des Latex) wurde zu 288 nm ermittelt. Die Teilchengrößenverteilung war eng (Q = 0,1).

(a2) 150 Teile dieses Latex wurden mit 40 Teilen einer Mischung aus Styrol und Acrylnitril (Verhältnis 75 : 25) und 110 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Das bei der Pfropfmischpolymerisation erhaltene Polymerisationsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 27% ermittelt.

Beispiel 3

*Herstellung von großteiligem Pfropfcopolymerisat (A)*

(a1) 16 Teile Butylacrylat und 0,4 Teile Tricyclodecenylacrylat wurden in 150 Teilen Wasser unter Zusatz von 0,5 Teilen des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 216 nm ermittelt. Die Teilchengrößenverteilung war eng (Q = 0,29).

(a2) 150 Teile des nach (al) erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Nach Beendigung der ersten Stufe der Pfropfmischpolymerisation hatte das Pfropfmischpolymerisat einen Pfropfgrad von 17%. Diese Pfropfmischpolymerisatdispersion wurde ohne weitere Zusatzstoffe mit 20 Teilen einer Mischung aus Styrol und Acrylnitril (Verhältnis 75 : 25) weitere 3 Stunden polymerisiert. Nach Beendigung der Pfropfmischpolymerisation wurde das Produkt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%, die mittlere Teilchengröße der Latexteilchen wurde zu 238 nm ermittelt.

Beispiel 4

*Herstellung von großteiligem Pfropfcopolymerisat (A)*

(a1) Zu einer Vorlage aus 2,5 Teilen des in Beispiel 3 (Komponente A) hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengröße (Gewichtsmittel) des Latex wurde zu 410 nm ermittelt. Die Teilchengrößenverteilung war eng (Q = 0,1).

(a2) 150 Teile des nach (al) erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75 : 25 weitere 4 Stunden polymerisiert. Das Reaktionsprodukt wurde dann mittels einer Calciumchloridlösung bei 95 °C aus der Dispersion ausgefällt, abgetrennt, mit Wasser gewaschen und im warmen Luftstrom getrocknet. Der Pfropfgrad des Pfropfmischpolymerisats wurde zu 35% ermittelt, die mittlere Teilchengröße der Latexteilchen betrug 490 nm.

Beispiel 5

*Herstellung von großteiligem Pfropfcopolymerisat (A)*

(a1) 98 Teile Acrylsäurebutylester und 2 Teile Tricyclodecenylacrylat wurden in 154 Teilen Wasser unter Zusatz von 2 Teilen Dioctylsulfosuccinatnatrium (70%ig) als Emulgator und 0,5 Teilen Kaliumpersulfat unter Rühren 3 Stunden bei 65°C polymerisiert. Man erhielt eine etwa 40%ige Dispersion. Die mittlere Teilchengröße des Latex war etwa 100 nm.

Zu einer Vorlage aus 2,5 Teilen dieses Latex, 400 Teilen Wasser sowie 0,5 Teilen Kaliumpersulfat wurde bei 65°C eine Mischung von 49 Teilen Acrylsäurebutylester, 1 Teil Tricyclodecenylacrylat und 0,38 Teilen des Emulgators innerhalb von 1 Stunde zugegeben. Im Verlauf einer weiteren Stunde fügte man eine Mischung von 49 Teilen Acrylsäurebutylester, 1 Teil Tricyclodecenylacrylat und 0,76 Teilen Emulgator zu. Nach Zugabe von 1 Teil Kaliumpersulfat in 40 Teilen Wasser wurde schließlich innerhalb von 2 Stunden eine Mischung aus 196 Teilen Acrylsäurebutylester, 4 Teilen Tricyclodecenylacrylat sowie 1,52 Teilen des Emulgators zugetropft. Die Polymerisatmischung wurde anschließend noch 2 Stunden bei 65°C nachpolymerisiert. Man erhielt eine etwa 40%ige Dispersion mit einem mittleren Teilchendurchmesser von etwa 500 nm.

Gab man statt insgesamt 300 Teilen an Monomeren nur 100 Teile zu, so erhielt man einen Latex mit einem mittleren Teilchendurchmesser von etwa 300 nm.

(a2) 465 Teile Styrol und 200 Teile Acrylnitril wurden in Gegenwart von 2500 Teilen des Polymerisatlatex nach (al) mit der mittleren Teilchengröße 0,1 bzw. 0,3 bzw. 0,5 μm, 2 Teilen Kaliumsulfat, 1,33 Teilen Laurylperoxid und 1005 Teilen Wasser unter Rühren bei 60°C polymerisiert. Man erhielt eine 40%ige Dispersion, aus der das Festprodukt durch Zusatz einer 0,5%igen Calciumchloridlösung ausgefällt, mit Wasser gewaschen und getrocknet wurde.

Beispiel 6

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-%, bezogen auf das Copolymerisat, und eine Viskositätszahl von 80 ml/g.

Beispiel 7

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-%, bezogen auf das Copolymerisat, und eine Viskositätszahl von 60 ml/g.

Beispiel 8

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 27 Gew.-%, bezogen auf das Copolymerisat, und eine Viskositätszahl von 80 ml/g.

Vergleichsbeispiel 1

Als Vergleichspolymerisat wurde ein Polycarbonat verwendet, das eine Viskositätszahl von 61,5 aufwies. Das verwendete Polymerisat wird unter dem Handelsnamen Lexan ® 161 von General Electric Plastics vertrieben.

Vergleichsbeispiel 2

*ABS-Polymerisat*

Als Vergleichspolymerisat wurde ein Polybutadien-Kautschuk verwendet, der gepfropft war mit einem Styrol-Acrylnitril-Copolymer als Komponente (A), die in einer Styrol-Acrylnitril-Copolymer-Matrix als Komponente (B) vorlag. Der Gehalt an Pfropfkautschuk betrug 29 Gew.-%, bezogen auf das Gesamtgewicht des fertigen Polymerisats.

Vergleichsbeispiel 3

*ABS/PC-Blend*

Als weitere Formmasse zu Vergleichszwecken wurde ein Blend aus ABS und Polycarbonat verwendet das einen Polycarbonatanteil von 60 Gew.-% aufwies. Die Komponente hatte eine VZ von 61,5 ml/g.

Beispiel 9

Entsprechend den Angaben in der nachstehenden Tabelle 1 werden die angegebenen Mengen der entsprechenden Polymerisate (A) und (B) bzw. der Vergleichsmassen in einem Schneckenextruder bei einer Temperatur von 200°C - 230°C gemischt. Aus den dadurch gebildeten Formmassen wurden gespritzte Probekörper mit den Abmessungen 2 x 15 x 80 mm unter den in DIN-Norm 16777 angegebenen Bedingungen hergestellt. Die Formkörper wurden analog zu ISO 4599 durch Biegung über eine Schablone zeitlich einer konstanten Verformung ausgesetzt. Sie wurden 24 Stunden in Luft zu Vergleichszwecken bzw. in 10%er NH$_3$-Lösung gelagert. Die Biegeradien wurden dabei von unendlich bis auf 50 mm variiert. Anschließend wurden die Veränderungen im Biegeschlagtest gemessen. Die Beurteilung erfolgte nach folgender Bewertung:

+++:     sehr gute Spannungsrißbeständigkeit
+:     gute Spannungsrißbeständigkeit
+/-:     mäßige Spannungsrißbeständigkeit
--:     sehr schlechte Spannungsrißbeständigkeit

Zudem wurde die Alterungsbeständigkeit bei 90°C bestimmt und zwar nach ISO 6603-2 durch Messung der Durchstoßenergie nach 0,1 und 2 Jahren. Darüber hinaus wurde die Dichte bestimmt nach DIN 5349.
Die Ergebnisse sind in nachstehender Tabelle wiedergegeben:

## Tabelle 1

| Formmassen | Komp. aus Bsp. | Teile | Dichte DIN 53479 | Chemik. Beständigkeit Spannungs-rißvers. NH§-Lösung 10% | Alterungs-Best. bei 90°C Durch-Stoß ISO 6603-2 OJ/1J/2 Jahre Nm |
|---|---|---|---|---|---|
| I | A:3 | 47 | | | |
| | B:6 | 53 | 1,07 | + + + | 40/30/24 |
| Extrusion | | | | | |
| II | A:1 | 25 | 1,07 | + + + | 40/30/24 |
| Spritzguß | B:6 | 10 | | | |
| | B:7 | 55 | | | |
| III | A:1 | 10 | | | |
| | A:3 | 10 | 1,15 | + | 60/55/50 |
| | B:6 | 20 | | | |
| | PC | 60 | | | |
| Vergl. I | Vergl. 1 | | 1,20 | -- | nicht ge-prüft |
| Vergl. II | Vergl. 2 | | 1,05 | +/- | 40/<5/<3 |
| Vergl. III | Vergl. 3 | - | 1,13 | +/- | 70/<10/<5 |
| | | | | | |

Aus den Ergebnissen aus der Tabelle geht hervor, daß die erfindungsgemäßen Formmassen eine wesentlich bessere Chemikalienbeständigkeit und Alterungsbeständigkeit aufweisen als die Vergleichsmassen. Sie sind somit

**EP 0 914 374 B1**

sehr vorteilhaft einsetzbar zur Herstellung von Vorrichtungen zur Haltung oder Versorgung von Kleintieren.

**Patentansprüche**

1. Verwendung einer von ABS verschiedenen thermoplastischen Formmasse, enthaltend, bezogen auf die Summe der Mengen der Komponenten A und B, und ggf. C und/oder D, die insgesamt 100 Gew.-% ergibt,

   a: 1 - 99 Gew.-% eines teilchenförmigen Emulsionspolymerisats mit einer Glasübergangstemperatur unterhalb von 0 °C und einer mittleren Teilchengröße von 50 - 1000 nm als Komponente A, wobei es sich um ein Pfropfcopolymerisat handelt aus

   a1: 1 - 99 Gew.-% einer teilchenförmigen Pfropfgrundlage A1 mit einer Glasübergangstemperatur unterhalb von 0°C,

   a2: 1 - 99 Gew.-% einer Pfropfauflage A2 aus den Monomeren, bezogen auf A2,

   a21: 40 - 100 Gew.-% Einheiten eines vinylaromatischen Monomeren als Komponente A21 und

   a22: bis 60 Gew.-% Einheiten eines ethylenisch ungesättigten Monomeren als Komponente A22,

   wobei die Pfropfauflage A2 aus mindestens einer Pfropfhülle besteht

   b: 1 - 99 Gew.-% mindestens eines amorphen oder teilkristallinen Polymerisats als Komponente B,

   c: 0 - 50 Gew.-% Polycarbonate als Komponente C, und

   d: 0 - 50 Gew.-% faser- oder teilchenförmige Füllstoffe oder deren Gemische als Komponente D

   zur Herstellung von Vorrichtungen zur Haltung oder Versorgung von Kleintieren.

2. Verwendung nach Anspruch 1, dadurch gekennzeichnet, daß die Formmasse als teilchenförmige Pfropfgrundlage A1 einen Acrylat-, EP-, EPDM- oder Siliconkautschuk enthält.

3. Verwendung nach Anspruch 2, dadurch gekennzeichnet, daß die Komponente A1 besteht aus den Monomeren

   a11: 80 - 99,99 Gew.-% eines $C_{1-8}$-Alkylesters der Acrylsäure, als Komponente A11,

   a12: 0,01 - 20 Gew.-% mindestens eines polyfunktionellen vernetzenden Monomeren als Komponente A12.

4. Verwendung nach einem der Ansprüche 1 bis 3, dadurch gekennzeichnet, daß die Teilchengrößenverteilung der Komponente A bimodal ist, wobei 60 - 90 Gew.-% eine mittlere Teilchengröße von 50 - 200 nm und 10 - 40 Gew.-% eine mittlere Teilchengröße von 50 - 400 nm aufweisen, bezogen auf das Gesamtgewicht der Komponente A.

5. Verwendung nach einem der Ansprüche 1 bis 4, dadurch gekennzeichnet, daß die Vorrichtungen Tränken oder Tröge sind.

6. Verwendung nach einem der Ansprüche 1 bis 4, dadurch gekennzeichnet, daß die Vorrichtungen Behältnisse für die Tierhaltung und Tieraufzucht bzw. den Tiertransport sind.

7. Verwendung nach einem der Ansprüche 1 bis 4, dadurch gekennzeichnet, daß die Vorrichtungen Gitterroste für Böden und/oder Wände von Tierboxen sind.

8. Vorrichtung zur Haltung und Versorgung von Kleintieren, aus einer thermo plastischen Formmasse, wie sie in einem der Ansprüche 1 bis 4 definiert ist.

9. Vorrichtung nach Anspruch 8, dadurch gekennzeichnet, daß die Vorrichtung eine Tränke, ein Trog, ein Behältnis für die Tierhaltung und Tieraufzucht oder ein Gitterrost ist.

**EP 0 914 374 B1**

## Claims

1. The use of a thermoplastic molding composition differing from ABS and comprising, based on a total of 100% by weight of amounts of components A and B, and, if desired, C and/or D,

   a: as component A, from 1 to 99% by weight of a particulate emulsion polymer with a glass transition temperature of below 0°C and with a median particle size of from 50 to 1000 nm, which is a graft copolymer made from

   a1:    from 1 to 99% by weight of a particulate graft base A1 with a glass transition temperature of below 0°C,

   a2:    from 1 to 99% by weight of a graft A2 made from the monomers, based on A2,

   a21:    as component A21, from 40 to 100% by weight of units of a vinylaromatic monomer, and

   a22:    as component A22, up to 60% by weight of units of an ethylenically unsaturated monomer,

   where the graft A2 is composed of at least one graft shell.

   b: as component B, from 1 to 99% by weight of at least one amorphous or partly crystalline polymer,

   c: as component C, from 0 to 50% by weight of polycarbonates, and

   d: as component D, from 0 to 50% by weight of fibrous or particulate fillers or mixtures of these

   for producing devices for keeping or caring for small animals.

2. The use as claimed in claim 1, wherein the particulate graft base A1 in the molding composition is an acrylate rubber, EP rubber, EPDM rubber or silicone rubber.

3. The use as claimed in claim 2, wherein component A1 is composed of the following monomers:

   a11: as component A11, from 80 to 99.99% by weight of a $C_1$-$C_8$-alkyl acrylate, and

   a12: as component A12, from 0.01 to 20% by weight of at least one polyfunctional crosslinking monomer.

4. The use as claimed in any one of claims 1 to 3, wherein the particle size distribution of component A is bimodal, where, based on the total weight of component A, from 60 to 90% by weight has an average particle size of from 50 to 200 nm and from 10 to 40% by weight has an average particle size of from 50 to 400 nm.

5. The use as claimed in any one of claims 1 to 4, wherein the devices are troughs or drinking facilities.

6. The use as claimed in any one of claims 1 to 4, wherein the devices are containers for the keeping or rearing of animals, and/or for the transporting of animals.

7. The use as claimed in any one of claims 1 to 4, wherein the devices are gratings for floors and/or walls of containers for animals.

8. A device for keeping or caring for small animals, made from a thermoplastic molding composition as defined in any of claims 1 to 4.

9. A device as claimed in claim 8, which is a drinking trough or other trough, or a container for the keeping or rearing of animals, or is a grating.

## Revendications

1. Utilisation d'une masse à mouler thermoplastique différente de l'ABS, contenant, par rapport à la somme des quantités des composants A et B, et éventuellement C et/ou D, qui en totalité représente 100 % en poids,

**17**

a: 1 à 99 % en poids d'un polymère particulaire en émulsion ayant une température de transition vitreuse inférieure à 0°C et une granulométrie moyenne de 50 à 1000 nm, en tant que composant A, pour lequel il s'agit d'un copolymère greffé,

a1: 1 à 99 % en poids d'un tronc de greffage particulaire A1 ayant une température de transition vitreuse inférieure à 0°C,

a2: 1 à 99 % en poids d'un greffon A2 constitué des monomères suivants, les pourcentages étant rapportés à A2,

a21 : 40 à 100 % en poids de motifs d'un monomère vinylaromatique, en tant que composant A21, et

a22 : jusqu'à 60 % en poids de motifs d'un monomère à insaturation éthylénique, en tant que composant A22,

le greffon A2 étant constitué d'au moins une gaine de greffage ;

b: 1 à 99 % en poids d'au moins un polymère amorphe ou partiellement cristallin, en tant que composant B,

c: 0 à 50 % en poids de polycarbonates, en tant que composant C, et

d: 0 à 50 % en poids de matière de charge fibreuse ou particulaire, ou leurs mélanges, en tant que composant D

pour fabriquer des équipements destinés à l'élevage et à l'alimentation de petits animaux.

2. Utilisation selon la revendication 1, caractérisée en ce que la masse à mouler contient, en tant que tronc de greffage particulaire A1, un caoutchouc acrylate, EP, EPDM ou silicone.

3. Utilisation selon la revendication 2, caractérisée en ce que le composant A1 est constitué des monomères suivants :

a11 : 80 à 99,99 % en poids d'un ester alkylique en $C_{1-8}$ de l'acide acrylique, en tant que composant A11,

a12 : 0,01 à 20 % en poids d'au moins un monomère réticulable polyfonctionnel, en tant que composant A12.

4. Utilisation selon l'une des revendications 1 à 3, caractérisée en ce que la répartition granulométrique du composant A est bimodale, 60 à 90 % en poids ayant une granulométrie moyenne de 50 à 200 nm et 10 à 40 % en poids ayant une granulométrie moyenne de 50 à 400 nm, les pourcentages étant rapportés au poids total du composant A.

5. Utilisation selon l'une des revendications 1 à 4, caractérisée en ce que les équipements sont des abreuvoirs ou des mangeoires.

6. Utilisation selon l'une des revendications 1 à 4, caractérisée en ce que les équipements sont des récipients pour l'élevage et l'entretien des animaux, ou pour le transport des animaux.

7. Utilisation selon l'une des revendications 1 à 4, caractérisée en ce que les équipements sont des caillebotis pour les planchers et/ou les murs de cages pour animaux.

8. Equipement pour l'élevage et l'alimentation de petits animaux, constitué d'une masse à mouler thermoplastique telle que définie dans l'une des revendications 1 à 4.

9. Equipement selon la revendication 8, caractérisé en ce que l'équipement est un abreuvoir, une mangeoire, un récipient pour l'entretien et l'élevage des animaux, ou un caillebotis.